# EUROPEAN PATENT APPLICATION

(11) **EP 2 645 252 A1**
(43) Date of publication of application: **02.10.2013**
(21) Application number: 13152835.8
(22) Date of filing: 28.01.2013
(51) Int. Cl.: G06F 11/14, G06F 9/44

(54) **Information processing system and virtual address setting method**

(30) Priority: 29.03.2012 JP 2012077831
(71) Applicant: FUJITSU LIMITED, Kawasaki-shi, Kanagawa 211-8588 (JP)
(72) Inventor: Tamura, Naohiro, Kanagawa, 211-8588 (JP)
(74) Representative: HOFFMANN EITLE

(57) **Abstract**

An information processing system (10) includes an information processing apparatus (40), which includes an arithmetic processing unit (400) and a control device (300) that is connected to the arithmetic processing unit (400), and includes a management device (20) that manages a virtual address. When a communication abnormality occurs between the management device (20) and the control device (300), the management device (20) instructs the control device (300) to perform a start via the arithmetic processing unit (400). When the control device (300) is instructed by the arithmetic processing unit (400) to perform a start, the control device (300) transfers the virtual address stored in a storing unit (311) to the arithmetic processing unit (400). When the arithmetic processing unit (400) receives the virtual address from the control device (300), the arithmetic processing unit (400) sets a port included in the arithmetic processing unit (400) to the virtual address.

## Description

### FIELD

The embodiments discussed herein are related to an information processing system and a virtual address setting method.

### BACKGROUND

Network interface cards (NICs) and host bus adapters (HBAs) for use in blade servers are allocated unique physical addresses before shipment. Furthermore, a storage device connected to a blade server stores therein a physical address that is allocated to an HBA in a blade server that has access permission and determines whether to permit an access from the blade server on the basis of the stored physical address.

Therefore, when the blade server connected to the storage device is replaced, the storage device changes the physical address to which an access is permitted. Because of this, there is a known Input/Output (10) virtualization technology that sets a virtual address, which is different from the unique physical address, in an NIC or an HBA included in a blade server.

With the IO virtualization technology, when an administrator replaces, for example, a blade server, by setting the blade server after the replacement to the same virtual address as that set to the blade server before the replacement, the replacement blade server maintains the same address as the replaced blade server.

Accordingly, the replacement blade server can access the storage device without changing the storage device's settings being changed. Furthermore, the replacement blade server boots up from the operating system (OS), programs, and data that are stored in a storage device, thus starting its operation. Therefore, a user can continue his or her tasks by using the replacement blade server without changing the address stored in the storage device.

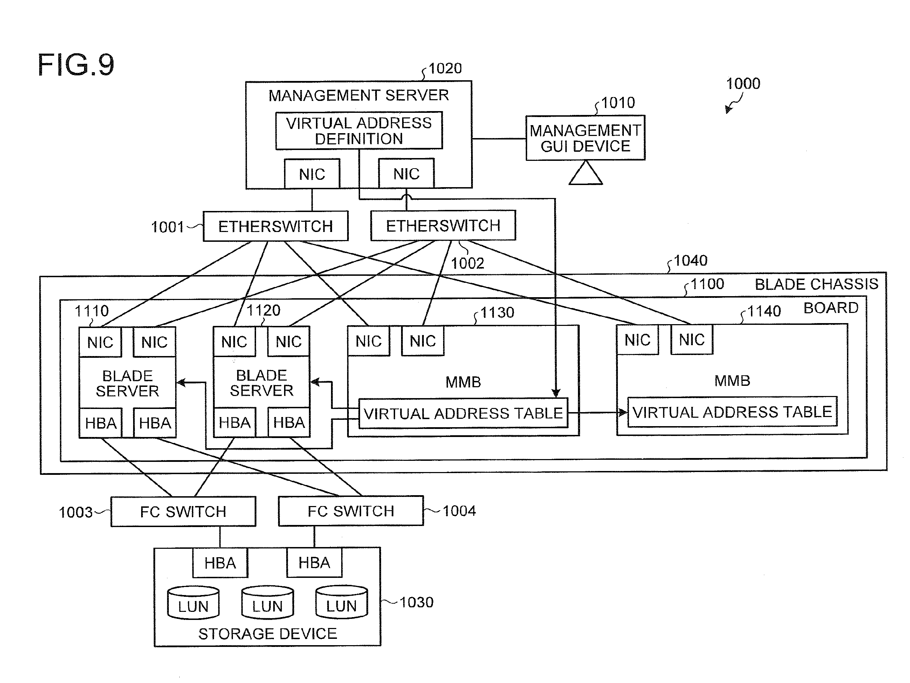

In the following, the IO virtualization technology in which a blade server is a server that is to be managed will be described with reference to FIG. 9. FIG. 9 is a schematic diagram illustrating an example of an IO virtualization technology in which a blade server is to be managed. As illustrated in FIG. 9, an information processing system 1000 includes a management graphical user interface (GUI) device 1010, a management server 1020, a storage device 1030, and a blade chassis 1040. In the information processing system 1000, the management server 1020 is connected to the blade chassis 1040 via etherswitches 1001 and 1002. Furthermore, the storage device 1030 is connected to the blade chassis 1040 via FC switches 1003 and 1004.

Furthermore, the blade chassis 1040 includes a board 1100. The board 1100 has mounted thereon blade servers 1110 and 1120 and management blades (MMBs) 1130 and 1140, which are dedicated units for managing the server. Furthermore, the blade servers 1110 and 1120 and the MMBs 1130 and 1140 are connected to the management server 1020 via the etherswitches 1001 and 1002. In other words, the information processing system 1000 duplexes the control routes of the blade chassis 1040 that is to be managed.

The management GUI device 1010 receives, from an administrator, the definition of the virtual addresses of the blade servers 1110 and 1120 that are to be managed. The management server 1020 sets the virtual address defined by the administrator in a virtual address table in the MMB 1130 in the blade chassis 1040. Then, the MMB 1130 copies the virtual address in preparation for a failure of its own device and stores the copied address in the MMB 1140, thereby backing up the virtual address.

Furthermore, the administrator turns on the power supply of the blade servers 1110 and 1120 from the management server via the MMB 1130. By doing so, via a basic input/output system (BIOS) of the blade servers 1110 and 1120, the MMB 1130 sets the NICs and the HBAs that are included in the blade servers 1110 and 1120 to the virtual addresses that are stored in the virtual address table.

Consequently, the blade servers 1110 and 1120 can access the storage device 1030, thereby performing a boot from the OS, the programs, and the data stored in the storage device 1030, thus starting their operations.

Because the virtual addresses in the blade chassis 1040 are stored in volatile memories in an NIC and an HBA, the virtual addresses are automatically deleted when the power supply of the blade chassis 1040 is turned off. This makes it possible to prevent the same virtual address from being set for different servers in a duplicated manner when the blade chassis 1040 is relocated to another environment.

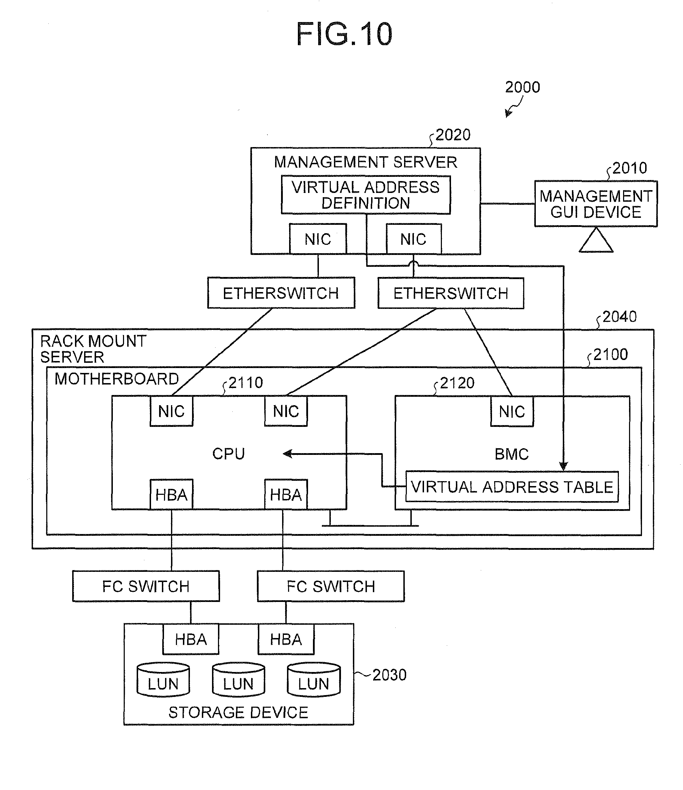

The IO virtualization technology described above is mainly used for blade servers; however, in recent years, there has been a demand to use this technology for rack mount servers used in large scale data centers. In the following, an information processing system will be described with reference to FIG. 10, in which the IO virtualization technology used for blade servers, is used for a rack mount server.

FIG. 10 is a schematic diagram illustrating an example of an IO virtualization technology in which a rack mount server is to be managed. As illustrated in FIG. 10, an information processing system 2000 includes a management GUI device 2010, a management server 2020, a storage device 2030, and a rack mount server 2040. A motherboard 2100 of the rack mount server 2040 has mounted thereon a central processing unit (CPU) 2110 and a baseboard management controller (BMC) 2120. The BMC 2120 is a dedicated unit for managing the server and provides the administrator with a failure report function and a remote control function even when an operating system fails due to, for example, a hardware failure.

With this information processing system 2000, first, an administrator defines, via the management GUI device 2010, the virtual address of the rack mount server 2040 that is to be managed. Then, the management server 2020 sets, in a virtual address table in the BMC 2120 in the rack mount server 2040, the virtual address of the device to be managed by using an interface called an intelligent platform management interface (IPMI).

Then, the administrator turns on the power supply of the rack mount server 2040, which is to be managed, from the management server 2020 via the BMC 2120. By doing so, the BMC 2120 sets, via a CPU 2110 in the rack mount server 2040, the NIC and the HBA that are included in the CPU 2110 to the virtual addresses. In this way, in the information processing system 2000, the IO virtualization technology is used for the rack mount server 2040.

Furthermore, by doing so, the rack mount server 2040 can access the storage device 2030, thereby booting up from the OS, the programs, and the data stored in the storage device 2030, thus starting its operation.
Patent Document 1: Japanese Laid-open Patent Publication No. 2004-320780
Patent Document 2: Japanese Laid-open Patent Publication No. 2008-225567
Patent Document 3: Japanese Laid-open Patent Publication No. 2011-48534

However, with the technology described above, when a failure occurs in a network between the management server and the BMC, there is a problem in that it is not possible to start the server that is to be managed.

The BMC is used to manage the rack mount server regardless of whether the power supply of the rack mount server is turned on or off and it is also used to manage the rack mount server in the pre-boot environment in which the operating system (OS) is not started.

For example, the BMC provides the administrator who operates a console screen from a remote site with a BIOS screen before the OS starts by using video redirection. The operation performed under the pre-boot environment is performed before a task is started in the rack mount server. Accordingly, if an abnormality occurs in the BMC before an operation starts, the administrator is not able to start the OS and thus detects an abnormality in the BMC. Furthermore, the abnormality occurring in the BMC after the OS starts does not directly disturb the task.

Accordingly, only a single communication port is arranged for the BMC and the network connection between the management server and the BMC is not duplexed. For example, the management server communicates with the BMC by using a port dedicated to the BMC and controls the BMC. Furthermore, in the rack mount server, the control of the communication with and the control of the BMC is usually performed neither from a LAN on Mother Board (LoM) nor from an expansion LAN card.

Accordingly, if there is a single point of failure in a network connection between the management server and the BMC and if a failure has occurred in a network route between the management server and the BMC, the rack mount server does not receive a command to set a virtual address from the management server. Consequently, the rack mount server is not able to set a virtual address and thus does not access the storage device.

Accordingly, it is an object in one aspect of an embodiment of the invention to provide an information processing system and a virtual address setting method that can start a device to be managed even when a communication abnormality occurs between a management device and a control device that are arranged in the device to be managed.

### SUMMARY

According to an aspect of an embodiment, an information processing system includes an information processing apparatus that includes an arithmetic processing unit and a control device that is connected to the arithmetic processing unit; and a management device that manages a virtual address. The management device includes an instructing unit that instructs, via the arithmetic processing unit when communication abnormality occurs between the management device and the control device, the control device to perform a start. The control device includes a transferring unit that transfers, when the control device is instructed by the arithmetic processing unit to perform a start, a virtual address stored in a storing unit to the arithmetic processing unit. The arithmetic processing unit includes a setting unit that sets, when the virtual address is received from the control device, a port included in the arithmetic processing unit to the virtual address.

### BRIEF DESCRIPTION OF DRAWINGS

FIG. 1 is a functional block diagram illustrating the functional configuration of an information processing system according to a first embodiment;
FIG. 2A is a schematic diagram illustrating an example of the data structure stored in a virtual address definition file;
FIG. 2B is a schematic diagram illustrating an example of initial setting values stored in a BMC;
FIG. 2C is a schematic diagram illustrating an example of the data structure stored in a virtual address table;
FIG. 3 is a schematic diagram illustrating the flow of the operation of a virtual address setting process performed on the BMC during normal operations;
FIG. 4 is a schematic diagram illustrating the flow of the operation of an OS start process performed by an arithmetic processing unit during normal operations;
FIG. 5 is a schematic diagram illustrating the flow of the operation of an OS start process performed by the arithmetic processing unit during abnormal operations;
FIG. 6 is a schematic diagram illustrating the flow of the operation of a virtual address setting process performed on the BMC during abnormal operations;
FIG. 7 is a flowchart illustrating the flow of the virtual address setting process performed on the BMC;
FIG. 8 is a flowchart illustrating the flow of the OS start process performed by the arithmetic processing unit;
FIG. 9 is a schematic diagram illustrating an example of an IO virtualization technology in which a blade server is to be managed; and
FIG. 10 is a schematic diagram illustrating an example of an IO virtualization technology in which a rack mount server is to be managed.

### DESCRIPTION OF EMBODIMENTS

Preferred embodiments of the present invention will be explained with reference to accompanying drawings.

The present invention is not limited to the embodiments. Furthermore, the embodiments can be appropriately used in combination as long as the processes do not conflict with each other.

### [a] First embodiment

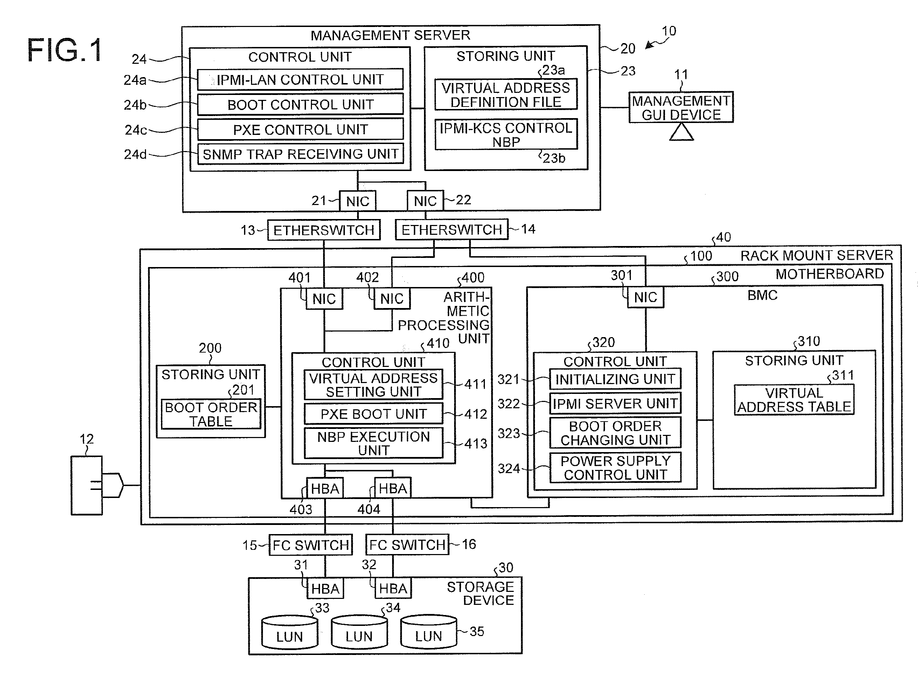

In a first embodiment, the configuration of the information processing system, the operation of the process performed in the information processing system, the flow of the process performed by the information processing system, and the like will be described with reference to FIGS. 1 to 8.

### Configuration of an information processing system 10 according to the first embodiment

The configuration of an information processing system 10 according to the first embodiment will be described with reference to FIG. 1. FIG. 1 is a functional block diagram illustrating the functional configuration of the information processing system 10 according to a first embodiment. As illustrated in FIG. 1, the information processing system 10 includes a management graphical user interface (GUI) device 11, a management server 20, a storage device 30, and a rack mount server 40.

In the information processing system 10, the management GUI device 11 is connected to the management server 20 via a network such that they can communicate with each other. Furthermore, the management server 20 is connected to the rack mount server 40 via an etherswitch 13 or an etherswitch 14 such that they can communicate with each other. Furthermore, the storage device 30 is connected to the rack mount server 40 via an FC switch 15 or an FC switch 16 such that they can communicate with each other.

The management GUI device 11 receives various settings from an administrator. For example, the management GUI device 11 receives, from the administrator, the definition of a virtual address of the rack mount server 40 that is a server to be managed. The management server 20 manages and controls the rack mount server 40, such as a setting, managing its state, boot control, detecting abnormalities, and the like. The configuration of the management server 20 will be described in detail later. The management server 20 is an example of a management device manages a device to be managed.

The storage device 30 includes a hard disk drive (HDD) (not illustrated) and stores therein various kinds of data and a program. For example, the storage device 30 stores therein an OS, a program, and data that are used by the rack mount server 40 for a SAN boot.

The rack mount server 40 includes a motherboard 100. The motherboard 100 includes a storing unit 200, a baseboard management controller (BMC) 300, and an arithmetic processing unit 400. The functions performed by the storing unit 200, the BMC 300, and the arithmetic processing unit 400 will be described later. The rack mount server 40 is an example of an information processing apparatus that is a device to be managed. The BMC is an example of a control device arranged in a device that is to be managed.

The rack mount server 40 accesses the data that is stored in the storage device 30 and executes various kinds of arithmetic processing. Furthermore, the rack mount server 40 stores the result of the arithmetic processing in the storage device 30. In the description below, the rack mount server 40 is referred to as a "server to be managed" where appropriate. Furthermore, electrical power is supplied to the rack mount server 40 from a power supply 12.

In the information processing system 10 described above, if an abnormality occurs in the network between the management server 20 and the BMC 300, the management server 20 instructs the BMC 300 via the arithmetic processing unit 400 to perform a start. If the BMC 300 is instructed by the arithmetic processing unit 400 to perform a start, the BMC 300 transfers, to the arithmetic processing unit 400, the virtual address that is stored in a virtual address table 311, which will be described later. Then, when the arithmetic processing unit 400 receives the virtual address from the BMC 300, the arithmetic processing unit 400 sets the port that is included in the arithmetic processing unit 400 to the received virtual address.

In the information processing system 10 in FIG. 1, a single rack mount server 40, which is a server to be managed, is arranged as an example; however, the number of servers to be managed included in the information processing system 10 is not limited thereto. Furthermore, in the information processing system 10, the number of storage devices 30 connected to the rack mount server 40 is not limited to that illustrated in FIG. 1.

### Functional configuration of the management server 20

In the following, the functional configuration of the management server 20 will be described with reference to FIG. 1. As illustrated in FIG. 1, the management server 20 includes network interface cards (NICs) 21 and 22, a storing unit 23, and a control unit 24.

The NIC 21 is an interface that connects the management server 20 and the rack mount server 40 via the etherswitch 13. The NIC 22 is an interface that connects the management server 20 and the rack mount server 40 via the etherswitch 14.

The storing unit 23 is a semiconductor memory device, such as a random access memory (RAM). The storing unit 23 includes a virtual address definition file 23a and an intelligent platform management interface (IPMI)-keyboard controller style (KCS) control network bootstrap program (NBP) 23b.

The virtual address definition file 23a stores therein virtual addresses of the rack mount server 40, which is the server to be managed, received from an administrator. The IPMI-KCS control NBP 23b is a firmware that controls the BMC 300 via the KCS interface. The IPMI-KCS control NBP 23b is downloaded from the management server 20 via a Preboot Execution Environment (PXE) by the arithmetic processing unit 400 included in the server to be managed.

The control unit 24 is an electronic circuit, such as a central processing unit (CPU) or a micro processing unit (MPU), and includes an IPMI-LAN control unit 24a, a boot control unit 24b, a PXE control unit 24c, and an SNMP trap receiving unit 24d.

The IPMI-LAN control unit 24a controls the BMC 300, which will be described later, by transmitting an IPMI virtual address setting command or an IPMI boot command via a LAN interface.

For example, when the IPMI-LAN control unit 24a receives, from the SNMP trap receiving unit 24d, information specifying a server to be managed, the IPMI-LAN control unit 24a searches the virtual address definition file 23a for virtual addresses of a server to be managed and reads it. Then, the IPMI-LAN control unit 24a transmits, to an IPMI server unit 322 in the BMC 300, both the virtual address and the IPMI virtual address setting command that are read using the IPMI interface.

Furthermore, when receiving an instruction to boot a server to be managed from the boot control unit 24b, the IPMI-LAN control unit 24a performs the following process. Namely, the IPMI-LAN control unit 24a issues an IPMI boot command and transmits the issued IPMI boot command and the virtual addresses to the IPMI server unit 322 in the BMC 300 in the server to be managed via the IPMI-LAN interface.

Furthermore, if the transmitted IPMI boot command is returned as a transmission error, the IPMI-LAN control unit 24a transmits a magic packet of a Wake up On LAN (WOL) to an NIC 401 and an NIC 402 in the server to be managed.

When the boot control unit 24b receives, from an administrator, an instruction to turn on the power supply of the server to be managed, the boot control unit 24b transmits the virtual addresses to the BMC 300 and outputs, to the IPMI-LAN control unit 24a, an instruction to boot the server to be managed.

The PXE control unit 24c responds to the PXE boot request from the server to be managed and transmits, to the server to be managed, both the IPMI-KCS control NBP 23b and the virtual addresses of the server to be managed. For example, the PXE control unit 24c receives a PXE boot request from the arithmetic processing unit 400, identifies the server to be managed from the information specifying the request source that is contained in the PXE boot request, and searches the virtual address definition file 23a for the virtual addresses of the server to be managed. Furthermore, the PXE control unit 24c reads the IPMI-KCS control NBP 23b from the storing unit 23. Then, the PXE control unit 24c transmits both the read IPMI-KCS control NBP 23b and the virtual addresses of the server to be managed to an NBP execution unit 413 in the arithmetic processing unit 400.

The SNMP trap receiving unit 24d receives an SNMP trap from an initializing unit 321 in the BMC 300 when the power supply of the rack mount server 40 is turned on and thus electrical power is supplied to the BMC 300, which will be described later. If the SNMP trap indicates a cold start, the SNMP trap receiving unit 24d outputs, as information specifying the server to be managed, transmission source information contained in the SNMP trap to the IPMI-LAN control unit 24a.

### Functional configuration of the storage device 30

In the following, the functional configuration of the storage device 30 according to the first embodiment will be described with reference to FIG. 1. The storage device 30 according to the first embodiment includes a host bus adapter (HBA) 31, an HBA 32, a logical unit number (LUN) 33, a LUN 34, and a LUN 35.

The HBA 31 is an interface that connects the storage device 30 to the rack mount server 40 via the FC switch 15. The HBA 32 is an interface that connects the storage device 30 to the rack mount server 40 via the FC switch 16.

The LUN 33 is a logical disk device that is obtained by logically dividing the HDD included in the storage device 30 and that is recognized as a single HDD by the rack mount server 40. Furthermore, similarly to the LUN 33, the LUN 34 and the LUN 35 are logical disk devices that are obtained by logically dividing the HDD included in the storage device 30 and that are recognized as a single HDD by the rack mount server 40.

Furthermore, the storage device 30 includes information in which a LUN is associated with a value of a world wide port name (WWPN) to which one of the ports of HBAs 403 and 404 in the rack mount server 40 is allocated. Furthermore, the storage device 30 permits an access only from the port of the HBA 403 or the HBA 404 in the rack mount server 40 containing a specific WWPN that is associated with the LUN. For example, if the LUN 33 is associated with the HBA 403 in the rack mount server 40, the storage device 30 permits, with respect to the LUN 33, access from the HBA 403 and does not permit, with respect to the LUN 33, access from the HBA 404.

### Functional configuration of the rack mount server 40

In the following, the functional configuration of the rack mount server 40 according to the first embodiment will be described with reference to FIG. 1. The rack mount server 40 according to the first embodiment includes the motherboard 100. The motherboard 100 includes the storing unit 200, the BMC 300, and the arithmetic processing unit 400. The storing unit 200, the BMC 300, and the arithmetic processing unit 400 are connected with each other by a bus.

The storing unit 200 is, for example, a complementary metal oxide semiconductor (CMOS) memory and stores therein information on a basic input/output system (BIOS) and a boot order table 201.

The boot order table 201 stores therein information indicating the priority of boot orders of the arithmetic processing unit 400. For example, if the boot order table 201 gives the SAN boot priority, the boot order table 201 stores therein the boot order in the order of the HBA 403, the HBA 404, the NIC 401, and the NIC 402. Furthermore, when the boot order table 201 gives the PXE boot received from the management server 20 priority, the boot order table 201 stores therein the boot order in the order of the NIC 401, the NIC 402, the HBA 403, and the HBA 404.

When a power plug is inserted into the power supply 12, the BMC 300 always starts a normal operation. For example, even when an operating system fails due to, for example, a hardware failure, the BMC 300 provides an administrator with a failure report function and a remote control function. Furthermore, the BMC 300 stores in the virtual address table 311, which will be described later, virtual addresses received from the management server 20.

The arithmetic processing unit 400 executes various kinds of arithmetic processing. Furthermore, when the power supply of the arithmetic processing unit 400 is turned on, the arithmetic processing unit 400 executes the SAN boot from the storage device 30 or the PXE boot from the management server 20.

### Functional configuration of the BMC 300

In the following, the functional configuration of the BMC 300 will be described with reference to FIG. 1. As illustrated in FIG. 1, the BMC 300 includes an NIC 301, a storing unit 310, and a control unit 320.

The NIC 301 is an interface that connects the management server 20 to the BMC 300 via the etherswitch 14. The BMC 300 is connected to the management server 20 only via the NIC 301.

The storing unit 310 is a semiconductor memory device, such as a RAM and includes the virtual address table 311. The virtual address table 311 stores therein virtual addresses to which the NIC 401, the NIC 402, the HBA 403, and the HBA 404 in the arithmetic processing unit 400 are set. The information stored in the virtual address table 311 will be described later.

The control unit 320 is an electronic circuit, such as a CPU or an MPU, and includes the initializing unit 321, the IPMI server unit 322, a boot order changing unit 323, and a power supply control unit 324.

When the power supply of the rack mount server is turned on and thus electrical power is supplied to the BMC 300, the initializing unit 321 transmits, to the SNMP trap receiving unit 24d in the management server 20, an SNMP trap instructing a cold start to be executed.

The IPMI server unit 322 receives both an IPMI virtual address setting command and virtual addresses from the IPMI-LAN control unit 24a in the management server 20 and stores the virtual addresses in the virtual address table 311.

Furthermore, if both the IPMI virtual address setting command and the virtual addresses are not received from the IPMI-LAN control unit 24a in the management server 20 and thus a time-out occurs, the IPMI server unit 322 allows the management server 20 to re-transmit the SNMP trap to the initializing unit 321 a predetermined number of times. Then, if the number of re-transmission times reaches the predetermined number of times, the IPMI server unit 322 determines that a failure has occurred in the network between the BMC 300 and the management server 20 and notifies the boot order changing unit 323 that a failure has occurred in the network.

Furthermore, when the IPMI server unit 322 receives the IPMI boot command from the IPMI-LAN control unit 24a in the management server 20, the IPMI server unit 322 instructs the power supply control unit 324 to turn on the power supply of the arithmetic processing unit 400.

Furthermore, when the IPMI server unit 322 receives a virtual address from the NBP execution unit 413 that executes the IPMI-KCS control NBP 23b via the KCS interface, the IPMI server unit 322 stores the received virtual addresses in the virtual address table 311.

The boot order changing unit 323 changes the priority of the boot orders of the arithmetic processing unit 400. If the boot order changing unit 323 gives the SAN boot priority, the boot order changing unit 323 stores, in the boot order table 201, the boot order in the order of, for example, the HBA 403, the HBA 404, the NIC 401, and the NIC 402. Furthermore, when the boot order changing unit 323 gives the PXE boot received from the management server 20 priority, the boot order changing unit 323 stores, in the boot order table 201, the boot order in the order of, for example, the NIC 401, the NIC 402, the HBA 403, and the HBA 404.

Furthermore, when the boot order changing unit 323 changes the boot order table 201 such that the PXE boot received from the management server 20 is given priority, the boot order changing unit 323 instructs the power supply control unit 324 to turn on the power supply of the arithmetic processing unit 400.

The power supply control unit 324 controls the on/off of the power supply of the arithmetic processing unit 400. For example, if the power supply control unit 324 receives an instruction to turn on the power supply of the arithmetic processing unit 400 from the IPMI server unit 322, the power supply control unit 324 turns on the power supply of the arithmetic processing unit 400. Furthermore, if the power supply control unit 324 receives an instruction to turn on the power supply of the arithmetic processing unit 400 from the boot order changing unit 323, the power supply control unit 324 turns on the power supply of the arithmetic processing unit 400.

Furthermore, when the power supply control unit 324 receives the WOL magic packet from the IPMI-LAN control unit 24a via the NIC 401 or the NIC 402, the power supply control unit 324 turns on the power supply of the arithmetic processing unit 400.

Furthermore, the power supply control unit 324 outputs a virtual address to a virtual address setting unit 411 by using a SMASH CLP interface.

### Functional configuration of the arithmetic processing unit 400

In the following, the functional configuration the arithmetic processing unit 400 will be described with reference to FIG. 1. As illustrated in FIG. 1, the arithmetic processing unit 400 includes the NIC 401, the NIC 402, the HBA 403, the HBA 404, and a control unit 410. The arithmetic processing unit 400 may also include a converged network adapter (CNA), which is an interface in which an NIC and an HBA are integrated.

The NIC 401 is an interface that connects the management server 20 to the arithmetic processing unit 400 via the etherswitch 13. The NIC 402 is an interface that connects the management server 20 to the arithmetic processing unit 400 via the etherswitch 14. Furthermore, the port of the NIC 401 and the port of the NIC 402 are each set to a virtual address.

The HBA 403 is an interface that connects the storage device 30 to the arithmetic processing unit 400 via the FC switch 15. The HBA 404 is an interface that connects the storage device 30 to the arithmetic processing unit 400 via the FC switch 16. Furthermore, the port of the HBA 403 and the port of the HBA 404 are each set to a virtual address.

The control unit 410 is an electronic circuit, such as a CPU or an MPU, and includes the virtual address setting unit 411, a PXE boot unit 412, and the NBP execution unit 413.

The virtual address setting unit 411 receives virtual addresses from the power supply control unit 324 in the BMC 300 and sets each of the NICs 401 and 402 and the HBAs 403 and 404 to a different one of the virtual addresses. For example, the virtual address setting unit 411 sets virtual addresses by using a peripheral component interconnect (PCI) option read only memory (ROM) interface.

When the power supply of the arithmetic processing unit 400 is turned on, if a priority order of the boot order table 201 indicates that the priority is given to the PXE boot received from the management server 20, the PXE boot unit 412 transmits, to the management server 20, a PXE boot request that requests a PXE boot.

The NBP execution unit 413 receives the IPMI-KCS control NBP 23b from the management server 20. Then, the NBP execution unit 413 executes the IPMI-KCS control NBP 23b and transmits virtual addresses to the IPMI server unit 322 in the BMC 300 via the KCS interface. Consequently, the IPMI server unit 322 in the BMC 300 sets the virtual address table 311 to the virtual addresses.

### Virtual address

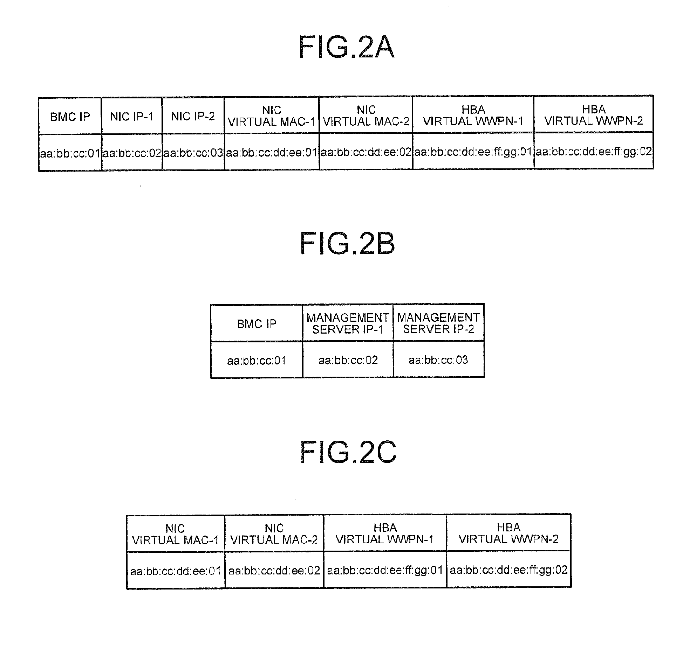

In the following, a virtual address will be described with reference to FIGS. 2A to 2C. A data structure stored in the virtual address definition file 23a will be described with reference to FIG. 2A, an initial setting value stored in the BMC 300 will be described with reference to FIG. 2B, and a data structure stored in the virtual address table 311 will be described with reference to FIG. 2C.

FIG. 2A is a schematic diagram illustrating an example of the data structure stored in the virtual address definition file 23a. As illustrated in FIG. 2A, the virtual address definition file 23a stores therein an address in which "BMC Internet Protocol (IP)", "NIC IP-1", and "NIC IP-2" are associated with each other. Furthermore, the virtual address definition file 23a stores therein an address in which "NIC virtual media access control (MAC)-1" is associated with "NIC virtual MAC-2". Furthermore, the virtual address definition file 23a stores therein an address in which "HBA virtual world wide port name (WWPN)-1" is associated with "HBA virtual WWPN-2". The data stored in the virtual address definition file 23a is set by an administrator via the management GUI device 11.

"BMC IP" indicates the IP address of the BMC 300. For example, "BMC IP" is set to "aa:bb:cc:01". The "NIC IP-1" indicates the IP address of the NIC 401. For example, the "NIC IP-1" is set to "aa:bb:cc:02". "NIC IP-2" indicates the IP address of the NIC 402. For example, "NIC IP-2" is set to "aa:bb:cc:03".

Furthermore, "NIC virtual MAC-1" indicates the MAC address that is virtually allocated to the NIC 401. For example, "NIC virtual MAC-1" is set to "aa:bb:cc:dd:ee:01". "NIC virtual MAC-2" indicates the MAC address that is virtually allocated to the NIC 402. For example, "aa:bb:cc:dd:ee:02" is set to "NIC virtual MAC-2".

Furthermore, "HBA virtual WWPN-1" indicates a WWPN that is virtually allocated to the HBA 403. For example, "HBA virtual WWPN-1" is set to "aa:bb:cc:dd:ee:ff:gg01". "HBA virtual WWPN-2" indicates a WWPN that is virtually allocated to the HBA 404. For example, "HBA virtual WWPN-2"is set to "aa:bb:cc:dd:ee:ff:gg02".

FIG. 2B is a schematic diagram illustrating an example of initial setting values stored in the BMC 300. As illustrated in FIG. 2B, the BMC 300 stores therein, as an initial setting value, an address in which a "BMC IP", a "management server IP-1", and a "management server IP-2" are associated with each other. The initial setting value is stored in, for example, the storing unit 310 in the BMC 300.

"BMC IP" indicates the IP address of the BMC 300. For example, the "BMC IP" is set to "aa:bb:cc:01". "management server IP-1" indicates an IP address of the management server 20. For example, "management server IP-1" is set to "aa:bb:cc:02". "management server IP-2" indicates the IP address of the management server 20. For example, "management server IP-2" is set to "aa:bb:cc:03".

FIG. 2C is a schematic diagram illustrating an example of the data structure stored in the virtual address table 311. As illustrated in FIG. 2C, the virtual address table 311 included in the BMC 300 stores therein an address in which "NIC virtual MAC-1", "NIC virtual MAC-2", "HBA virtual WWPN-1", and "HBA virtual WWPN-2" are associated with each other.

A value read from the virtual address definition file 23a is set, by the IPMI server unit 322, in "NIC virtual MAC-1", "NIC virtual MAC-2", "HBA virtual WWPN-1", and "HBA virtual WWPN-2" stored in the virtual address table 311. Accordingly, "NIC virtual MAC-1" and the "NIC virtual MAC-2" stored in the virtual address table 311 are the same as "NIC virtual MAC-1" and "NIC virtual MAC-2" stored in the virtual address definition file 23a illustrated in FIG. 2A. Furthermore, the "HBA virtual WWPN-1" and the "HBA virtual WWPN-2" store din the virtual address table 311 are the same as "HBA virtual WWPN-1" and "HBA virtual WWPN-2" stored in the virtual address definition file 23a illustrated in FIG. 2A.

### Operation of a process performed by the information processing system 10

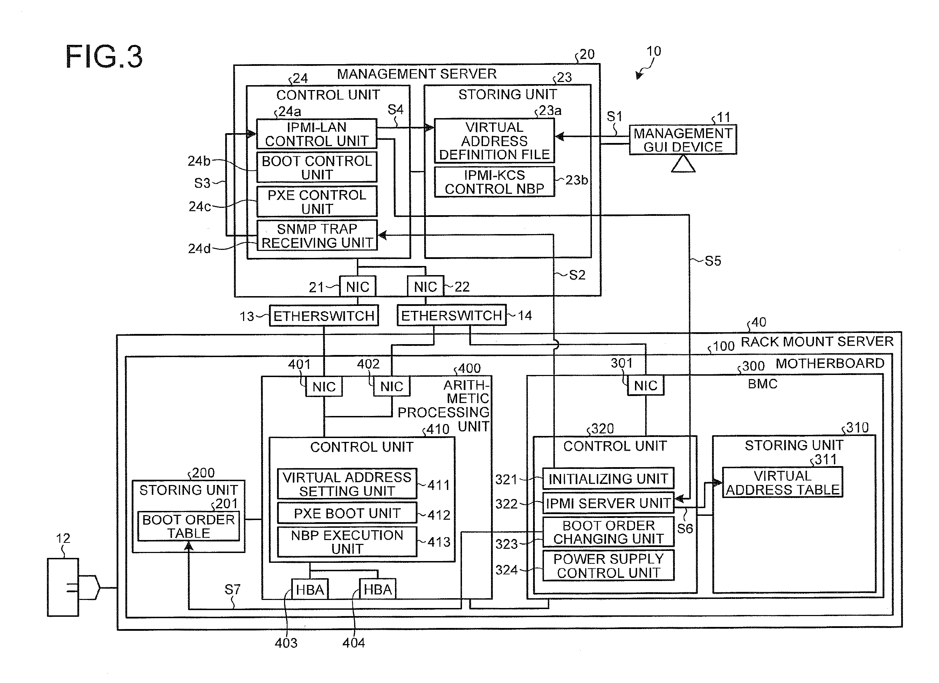

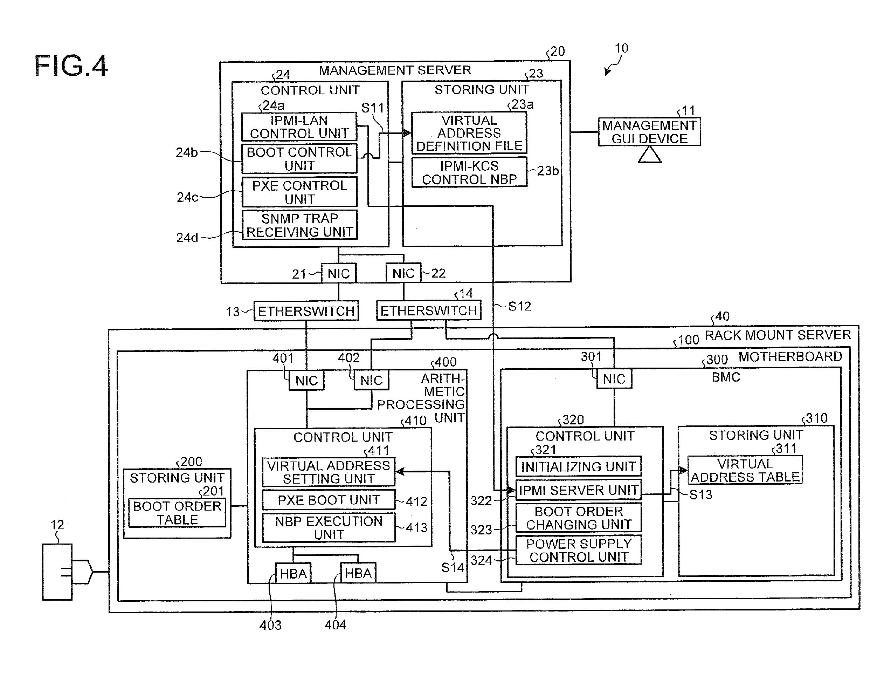

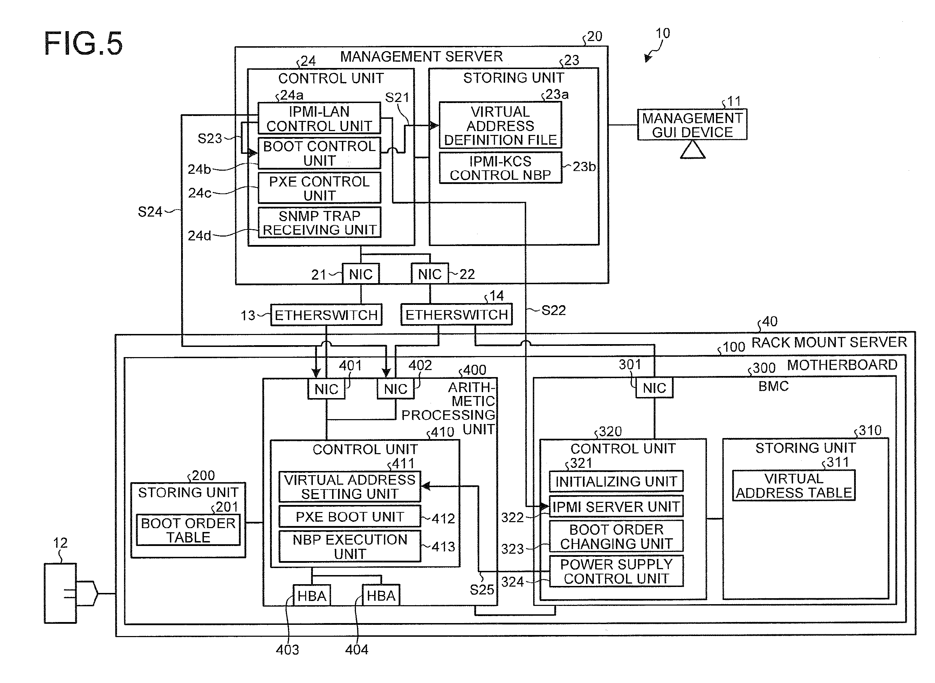

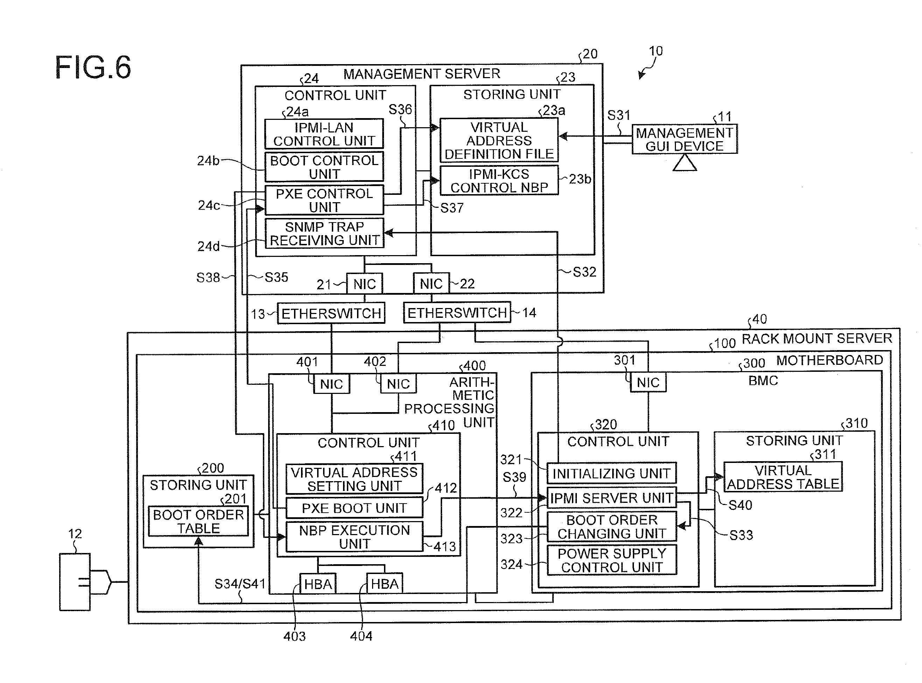

In the following, the operation of a process performed by the information processing system 10 will be described with reference to FIGS. 3 to 6. Specifically, the operation of a virtual address setting process performed on the BMC 300 during normal operations will be described with reference to FIG. 3. The operation of an OS start process performed by the arithmetic processing unit 400 during normal operations will be described with reference to FIG. 4. The operation of an OS start process performed by the arithmetic processing unit 400 during abnormal operations will be described with reference to FIG. 5. The operation of a virtual address setting process performed on the BMC 300 during abnormal operations will be described with reference to FIG. 6.

### Virtual address setting process performed on the BMC 300 during normal operations

FIG. 3 is a schematic diagram illustrating the flow of the operation of a virtual address setting process performed on the BMC 300 during normal operations. As illustrated in FIG. 3, the management GUI device 11 receives, from an administrator, a virtual address setting for the server to be managed. Then, the management server 20 stores, in the virtual address definition file 23a, the virtual address of the server to be managed that is received from the administrator via the management GUI device 11 (Step S1).

When the administrator turns on the power supply of the rack mount server 40, the initializing unit 321 in the BMC 300 refers to initial setting information and transmits an SNMP trap to the management server 20 (Step S2). Then, the SNMP trap receiving unit 24d in the management server 20 receives the SNMP trap from the BMC 300. At this point, if the SNMP trap indicates a cold start, the SNMP trap receiving unit 24d outputs, to the IPMI-LAN control unit 24a, transmission source information as information on the server to be managed (Step S3).

The IPMI-LAN control unit 24a searches the virtual address definition file 23a for virtual addresses of the server to be managed and reads it (Step S4). Then, the IPMI-LAN control unit 24a transmits the virtual addresses, which is read by using the IPMI interface, to the BMC 300 (Step S5).

The IPMI server unit 322 receives the virtual addresses from the management server 20 and stores the received virtual addresses in the virtual address table 311 (Step S6). Furthermore, the boot order changing unit 323 sets the boot order that allows the boot order table 201 to give a SAN boot priority (Step S7).

### OS start process performed by the arithmetic processing unit 400 during normal operations

FIG. 4 is a schematic diagram illustrating the flow of the operation of an OS start process performed by the arithmetic processing unit 400 during normal operations. As illustrated in FIG. 4, the management GUI device 11 receives, from an administrator, an instruction to turn on the power supply of the server to be managed. Then, the boot control unit 24b in the management server 20 refers to the virtual address definition file 23a, outputs virtual addresses of the server to be managed to the IPMI-LAN control unit 24a, and outputs an instruction to boot the server to be managed (Step S11).

The IPMI-LAN control unit 24a issues an IPMI boot command and transmits the issued IPMI boot command and the virtual addresses to the server to be managed via the IPMI-LAN interface (Step S12).

The IPMI server unit 322 receives, from the management server 20, both the IPMI boot command and the virtual addresses (Step S12). Then, the IPMI server unit 322 compares the received virtual addresses with the virtual address that is stored in the virtual address table 311 (Step S13). Then, if virtual addresses that are different from the received virtual addresses are stored, the IPMI server unit 322 stores the received virtual addresses in the virtual address table 311.

Then, the power supply control unit 324 turns on the power supply of the arithmetic processing unit 400 and outputs the virtual addresses to the virtual address setting unit 411 by using a SMASH CLP interface (Step S14). By using a PCI option ROM interface, the virtual address setting unit 411 sets virtual addresses to the NICs 401 and 402 and the HBAs 403 and 404 respectively.

OS start process performed by the arithmetic processing unit 400 during abnormal operations

A description has been given, with reference to FIGS. 3 and 4, of the operation of a process in the information processing system 10 when the network between the management server 20 and the BMC 300 is in normal operations. However, there may be a case in which an abnormality occurs in a network between the management server 20 and the BMC 300 in the information processing system 10; therefore, a description will be given here, with reference to FIGS. 5 and 6, of the operation of a process performed in the information processing system 10 when an abnormality occurs in a network between the management server 20 and the BMC 300. Examples of the network abnormalities include a failure of the NIC 22, the NIC 301, or the etherswitch 14, a failure of a cable between NIC 22 and the NIC 301, and the like.

FIG. 5 is a schematic diagram illustrating the flow of the operation of an OS start process performed by the arithmetic processing unit 400 during abnormal operations. Furthermore, FIG. 5 illustrates a case in which an abnormality occurs in the network between the management server 20 and the BMC 300 after virtual addresses are set in the virtual address table 311 in the BMC 300.

As illustrated in FIG. 5, the management GUI device 11 receives, from an administrator, an instruction to turn on the power supply of the server to be managed. Then, the boot control unit 24b in the management server 20 refers to the virtual address definition file 23a, outputs the virtual addresses of the server to be managed to the IPMI-LAN control unit 24a, and outputs an instruction to boot the server to be managed (Step S21).

The IPMI-LAN control unit 24a issues an IPMI boot command and transmits both the issued IPMI boot command and the virtual addresses to the server to be managed via the IPMI-LAN interface (Step S22). If a transmission error occurs, the IPMI-LAN control unit 24a re-transmits, to the server to be managed, the issued IPMI boot command and the virtual addresses a predetermined number of times. If a transmission error still occurs even after performing the re-transmission a predetermined number of times, the IPMI-LAN control unit 24a notifies the boot control unit 24b that a transmission error has occurred (Step S23).

Then, the IPMI-LAN control unit 24a transmits a WOL magic packet to the NICs 401 and 402 in the server to be managed (Step S24). Furthermore, the power supply control unit 324 turns on the power supply of the arithmetic processing unit 400 and outputs the virtual addresses to the virtual address setting unit 411 by using the SMASH CLP interface (Step S25). The virtual address setting unit 411 sets virtual addresses to the NICs 401 and 402 and the HBAs 403 and 404 respectively by using the PCI option ROM interface.

### Virtual address setting process performed on the BMC 300 during abnormal operations

FIG. 6 is a schematic diagram illustrating the flow of the operation of a virtual address setting process performed on the BMC 300 during abnormal operations. As illustrated in FIG. 6, the management GUI device 11 receives, from an administrator, a setting of virtual addresses of the server to be managed. Then, the management server 20 stores, in the virtual address definition file 23a, the virtual addresses of the server to be managed received from the administrator via the management GUI device 11 (Step S31).

If an administrator turns on the power supply of the rack mount server 40, the initializing unit 321 in the BMC 300 refers to the initial setting information and transmits an SNMP trap to the management server 20 (Step S32).

If both the IPMI virtual address setting command and the virtual addresses are not received from the management server 20 and thus a time-out occurs, the IPMI server unit 322 allows the initializing unit 321 to re-transmit the SNMP trap to the management server 20 a predetermined number of times. Then, if the number of re-transmission times reaches the predetermined number of times, the IPMI server unit 322 determines that a failure has occurred in the network between the BMC 300 and the management server 20 and notifies the boot order changing unit 323 that a failure has occurred in the network (Step S33).

The boot order changing unit 323 changes the priority of the boot orders such that the PXE boot from the management server 20 is given priority (Step S34). Then, the power supply control unit 324 in the BMC 300 turns on the power supply of the arithmetic processing unit 400.

The PXE boot unit 412 in the arithmetic processing unit 400 transmits the PXE boot request to the management server 20 (Step S35). The PXE control unit 24c in the management server 20 receives the PXE boot request from the arithmetic processing unit 400 and performs the following process. Namely, the PXE control unit 24c identifies the server to be managed from the information that specifies the request source contained in the PXE boot request and searches the virtual address definition file 23a for the virtual addresses of the server to be managed (Step S36).

Furthermore, the PXE control unit 24c reads the IPMI-KCS control NBP 23b (Step S37) and transmits the read IPMI-KCS control NBP 23b to the arithmetic processing unit 400 (Step S38).

The NBP execution unit 413 in the arithmetic processing unit 400 executes the IPMI-KCS control NBP 23b. Consequently, the NBP execution unit 413 issues an IPMI virtual address setting command and transmits it to the BMC 300 (Step S39).

The IPMI server unit 322 in the BMC 300 receives the IPMI virtual address setting command and sets the virtual address that is read from the IPMI virtual address setting command to the virtual address table 311 (Step S40).

The power supply control unit 324 in the BMC 300 turns off the power supply of the CPU. Furthermore, the boot order changing unit 323 in the BMC 300 changes the boot orders such that the SAN boot from the storage device 30 is given priority (Step S41).

### Flow of a process performed by the information processing system 10

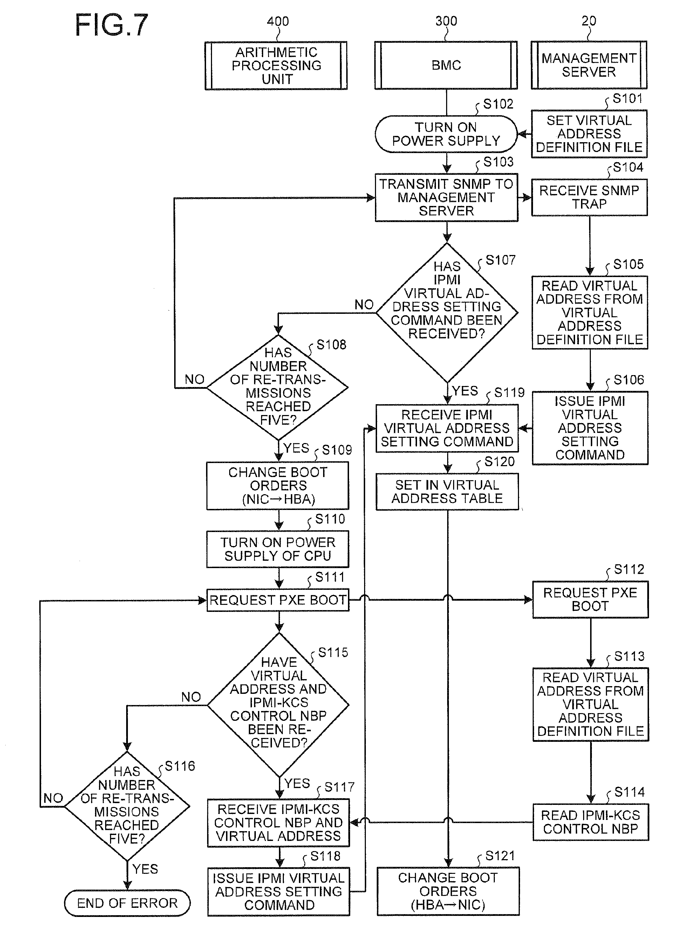

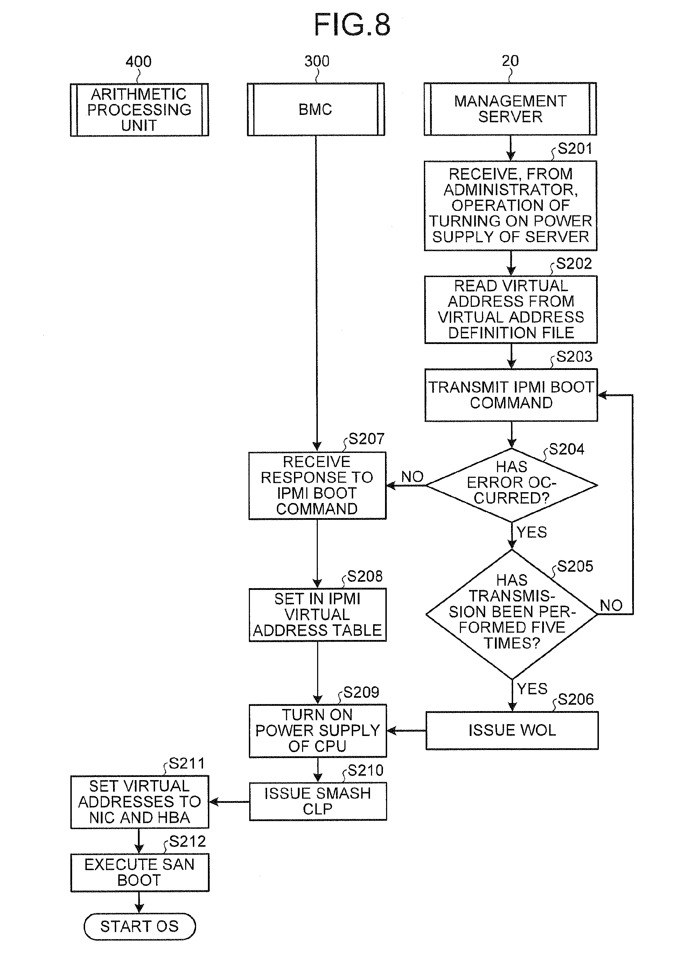

In the following, the flow of a process performed by the information processing system 10 will be described with reference to FIGS. 7 and 8. The flow of a virtual address setting process performed on the BMC 300 will be described with reference to FIG. 7. The flow of an OS start process performed by the arithmetic processing unit 400 will be described with reference to FIG. 8.

### Virtual address setting process performed on the BMC 300

FIG. 7 is a flowchart illustrating the flow of the virtual address setting process performed on the BMC 300. As illustrated in FIG. 7, the management server 20 receives an input of virtual addresses from an administrator and sets the received virtual address to the virtual address definition file 23a (Step S101). Then, when the administrator turns on the power supply of the server to be managed, electrical power is supplied to the BMC 300 (Step S102).

In the BMC 300, the initializing unit 321 transmits the SNMP trap to the management server 20 (Step S103). In the management server 20, the SNMP trap receiving unit 24d receives the SNMP trap (Step S104). If the SNMP trap indicates a cold start indicating an initial start, the SNMP trap receiving unit 24d outputs, to the IPMI-LAN control unit 24a, transmission source information as information on the server to be managed.

The IPMI-LAN control unit 24a reads, from the virtual address definition file 23a, the virtual addresses of the server to be managed (Step S105). Then, the IPMI-LAN control unit 24a issues an IPMI virtual address setting command and transmits it to the BMC 300 (Step S106). When the process at Step S106 ends, the BMC 300 in the information processing system 10 according to the first embodiment performs the process at Step S119.

Furthermore, in the BMC 300, if the initializing unit 321 transmits the SNMP trap to the management server 20, the IPMI server unit 322 determines whether the IPMI virtual address setting command has been received from the management server 20 (Step S107). If the IPMI server unit 322 determines that the IPMI virtual address setting command has been received from the management server 20 (Yes at Step S107), the process moves to Step S119.

Furthermore, if the IPMI virtual address setting command is not received from the management server 20 and thus a time-out occurs (No Step S107), the IPMI server unit 322 performs the following process. Namely, the IPMI server unit 322 allows the initializing unit 321 to re-transmit the SNMP trap to the management server 20. At this point, the IPMI server unit 322 determines whether the number of re-transmissions has reached the predetermined number of times (Step S108). In the following, a description will be given of a case in which the predetermined number of times is set to five; however, the predetermined number of times is not limited thereto. If the IPMI server unit 322 determines that the number of re-transmissions has not reached five (No Step S108), the IPMI server unit 322 allows the initializing unit 321 to transmit the SNMP trap to the management server 20.

If the IPMI server unit 322 determines that the number of re-transmissions has reached five (Yes at Step S108), the boot order changing unit 323 in the BMC 300 changes the boot orders (Step S109). For example, the boot order changing unit 323 changes the boot orders such that the PXE boot from the management server 20 is given priority.

Then, the power supply control unit 324 in the BMC 300 turns on the power supply of the arithmetic processing unit 400 (Step S110). Then, the PXE boot unit 412 in the arithmetic processing unit 400 transmits, to the management server 20, a PXE boot request that requests a PXE boot (Step S111).

The PXE control unit 24c in the management server 20 receives the PXE boot request from the arithmetic processing unit 400 (Step S112), identifies the server to be managed from the request source of the PXE boot request, and reads virtual addresses from the virtual address definition file 23a (Step S113). Furthermore, the PXE control unit 24c reads the IPMI-KCS control NBP 23b (Step S114). The PXE control unit 24c transmits both the read virtual addresses and the IPMI-KCS control NBP 23b to the arithmetic processing unit 400.

If the PXE boot unit 412 transmits the PXE boot request to the management server 20, the NBP execution unit 413 determines whether both the virtual addresses and the IPMI-KCS control NBP 23b have been received from the management server 20 (Step S115). If both the virtual addresses and the IPMI-KCS control NBP 23b have not been received from the management server 20 and thus a time-out occurs (No Step S115), the NBP execution unit 413 performs the following process. Namely, the NBP execution unit 413 allows the PXE boot unit 412 to re-transmit the PXE boot request to the management server 20. At this point, the NBP execution unit 413 determines whether the number of re-transmissions has reached the predetermined number of times (Step S116). Here, a description will be given of a case in which the predetermined number of times is set to five; however, the predetermined number of times is not limited thereto.

If the NBP execution unit 413 determines that the number of re-transmissions has not reached five (No at Step S116), the NBP execution unit 413 allows the PXE boot unit 412 to re-transmit the PXE boot request to the management server 20. Furthermore, if the NBP execution unit 413 determines that the number of re-transmissions has reached five (Yes at Step S116), the NBP execution unit 413 determines that an error has occurred and ends the process.

If the NBP execution unit 413 determines that both the virtual address and the IPMI-KCS control NBP 23b have been received from the management server 20 (Yes at Step S115), the NBP execution unit 413 performs the IPMI-KCS control NBP 23b (Step S117). The NBP execution unit 413 that has performed the IPMI-KCS control NBP 23b issues an IPMI virtual address setting command and transmits it to the BMC 300 (Step S118). When the process at Step S118 ends, the BMC 300 in the information processing system 10 according to the first embodiment performs the process at Step S119.

The IPMI server unit 322 in the BMC 300 receives the IPMI virtual address setting command (Step S119) and sets, in the virtual address table 311, the virtual addresses that are read from the IPMI virtual address setting command (Step S120).

The power supply control unit 324 in the BMC 300 turns off the power supply of the CPU. Furthermore, the boot order changing unit 323 in the BMC 300 changes the boot orders (Step S121). For example, the boot order changing unit 323 changes the boot orders such that the SAN boot from the storage device 30 is given to priority.

### OS start process performed by the arithmetic processing unit 400

FIG. 8 is a flowchart illustrating the flow of the OS start process performed by the arithmetic processing unit 400. As illustrated in FIG. 8, the management server 20 receives, from an administrator, an operation of turning on the power supply of the server to be managed (Step S201). The boot control unit 24b in the management server 20 reads the virtual addresses of the server to be managed from the virtual address definition file 23a (Step S202). Then, the boot control unit 24b notifies the IPMI-LAN control unit 24a of the virtual addresses of the server to be managed and instructs the IPMI-LAN control unit 24a to boot the server to be managed (Step S202).

The IPMI-LAN control unit 24a issues an IPMI boot command and transmits, to the BMC 300, both the issued IPMI boot command and the virtual addresses of the server to be managed (Step S203). Then, the IPMI-LAN control unit 24a determines whether an error has occurred in the transmission of both the IPMI boot command and the virtual addresses of the server to be managed (Step S204).

If the IPMI-LAN control unit 24a determines that an error has occurred in the transmission of both the IPMI boot command and the virtual addresses of the server to be managed (Yes at Step S204), the IPMI-LAN control unit 24a performs the following process. Namely, the IPMI-LAN control unit 24a issues an IPMI boot command and determines whether the process that transmits both the IPMI boot command and the virtual addresses of the server to be managed to the BMC 300 has been performed a predetermined number of times (Step S205). Here, a description will be given of a case in which the predetermined number of times is set to five; however, the predetermined number of times is not limited thereto.

If the IPMI-LAN control unit 24a issues an IPMI boot command and determines that the process that transmits both the IPMI boot command and the virtual addresses of the server to be managed to the BMC 300 has been performed five times (Yes at Step S205), the IPMI-LAN control unit 24a performs the following process. Specifically, the IPMI-LAN control unit 24a issues a WOL magic packet and transmits it to the NICs 401 and 402 in the server to be managed (Step S206).

Furthermore, if the IPMI-LAN control unit 24a issues an IPMI boot command and determines that the process that transmits both the IPMI boot command and the virtual addresses of the server to be managed to the BMC 300 has not been performed five times (No at Step S205), the IPMI-LAN control unit 24a performs the following process. Namely, the IPMI-LAN control unit 24a moves its process to Step S203.

Furthermore, if the IPMI-LAN control unit 24a determines that an error has not occurred in the transmission of both the IPMI boot command and the virtual addresses of the server to be managed (No at Step S204), the IPMI server unit 322 in the BMC 300 performs the following process. Namely, the IPMI server unit 322 receives both the IPMI boot command and the virtual addresses of the server to be managed (Step S207).

Furthermore, the IPMI server unit 322 compares the received virtual addresses with the virtual addresses that are stored in the virtual address table 311. If the virtual addresses that are stored are different from the received virtual addresses, the IPMI server unit 322 stores the received virtual addresses in the virtual address table 311 (Step S208).

After the process at Step S206 ends or after the process at Step S208 ends, the power supply control unit 324 in the BMC 300 turns on the power supply of the CPU (Step S209). Then, the power supply control unit 324 issues a SMASH CLP and transfers, to the virtual address setting unit 411 in the arithmetic processing unit 400, the virtual addresses received from the management server 20 (Step S210).

The virtual address setting unit 411 in the arithmetic processing unit 400 sets virtual addresses out of the received from the BMC 300 to the NICs 401 and 402 and the HBAs 403 and 404 respectively (Step S211). Consequently, the arithmetic processing unit 400 executes a SAN boot by using the virtual address (Step S212).

### Advantage of the first embodiment

As described above, in the information processing system 10 according to the first embodiment, when electrical power is supplied to the BMC 300, if the network between the management server 20 and the BMC 300 in the server to be managed is in normal operations, the management server 20 performs the following process. Namely, the management server 20 sets, in the virtual address table 311 in the BMC 300, a virtual address via the IPMI-LAN interface.

Furthermore, in the information processing system 10 according to the first embodiment, when electrical power is supplied to the BMC 300, if the network between the management server 20 and the BMC 300 in the server to be managed is in abnormal operations, the arithmetic processing unit 400 executes the program that is downloaded via a PXE mounted on the LoM. By doing so, the BMC 300 can set, in the virtual address table 311, the virtual address received from the IPMI-KCS interface.

Furthermore, in the information processing system 10 according to the first embodiment, after electrical power is supplied to the BMC 300, if the management server 20 is not able to transmit a command to the BMC 300, the management server 20 transmits the command via the arithmetic processing unit 400 and controls the BMC 300. Furthermore, the BMC 300 transfers the virtual addresses that are read from the virtual address table 311 to the arithmetic processing unit 400. Then, the arithmetic processing unit 400 sets the virtual addresses to the NICs 401 and 402 and the HBAs 403 and 404 respectively which are parts of the arithmetic processing unit 400 . Consequently, with the information processing system 10 according to the first embodiment, even if a failure occurs in the network between the management server 20 and the BMC 300, it is possible to start the server to be managed.

Furthermore, with the information processing system 10 according to the first embodiment, after electrical power is supplied to the BMC 300, when the server to be managed is started, the arithmetic processing unit 400 is set to the virtual addresses stored in the virtual address table 311 in the BMC 300. By doing so, the information processing system 10 according to the first embodiment can start the server to be managed in a short time regardless of whether the network between the management server 20 and the BMC 300 is in normal or abnormal operations.

Consequently, even if the server to be managed is a standard rack mount server that has x86/x64 architecture in which a network connection of a BMC is not duplexed, the information processing system 10 according to the first embodiment can implement the same high reliability and high availability as those performed by a blade server.

Furthermore, with the information processing system 10 according to the first embodiment, when the server to be managed is relocated to a system in another environment, the virtual address stored in the virtual address table 311 in the BMC 300 is deleted when the power supply is turned off. Consequently, the information processing system 10 according to the first embodiment can prevent the same virtual address from being set for different servers in a duplicated manner when the server to be managed is relocated to another environment.

### [b] Second Embodiment

In the above explanation, a description has been given of the embodiment according to the present invention; however, the embodiment is not limited thereto and can be implemented with various kinds of embodiments other than the embodiment described above. Therefore, another embodiment included in the present invention will be described below.

### System configuration, etc.

Of the processes described in the embodiment, the whole or a part of the processes that are mentioned as being automatically performed can be manually performed, or the whole or a part of the processes that are mentioned as being manually performed can be automatically performed using known methods. Furthermore, process procedures, the control procedures, and the specific names indicated in the above specification and drawings can be arbitrarily changed unless otherwise noted.

The components of each unit illustrated in the drawings are only for conceptually illustrating the functions thereof and are not always physically configured as illustrated in the drawings. For example, in the BMC 300, the initializing unit 321 may also be integrated with the IPMI server unit 322. Furthermore, all or any part of the processing functions performed by each device can be implemented by a CPU and by programs analyzed and executed by the CPU or implemented as hardware by wired logic.

Furthermore, in the embodiment described above, instead of the BMC that includes a single NIC, a BMC that includes multiple NICs may also be used. In such a case, for example, the process described above may also be performed when an abnormality of communication between a management server and all of the NICs included in the BMC occurs.

According to an aspect of the embodiment, an advantage is provided in that the information processing system can start a device to be managed even when there is an abnormality in the communication between a management device and a control device that is included in the device to be managed.

## Claims

1. An information processing system (10) comprising:
an information processing apparatus (40) that comprises an arithmetic processing unit (400) and a control device (300) that is connected to the arithmetic processing unit (400); and
a management device (20) that manages a virtual address, wherein
the management device (20) comprises an instructing unit (24a) that instructs, via the arithmetic processing unit (400) when communication abnormality occurs between the management device (20) and the control device (300), the control device (300) to perform a start,
the control device (300) comprises a transferring unit (324) that transfers, when the control device (300) is instructed by the arithmetic processing unit (400) to perform a start, a virtual address stored in a first storing unit (311) to the arithmetic processing unit (400), and
the arithmetic processing unit (400) comprises a setting unit (411) that sets, when the virtual address is received from the control device (300), a port included in the arithmetic processing unit (400) to the virtual address.

2. The information processing system (10) according to claim 1, wherein
the control device (300) further comprises
a virtual address requesting unit (323) that requests, when the control device (300) requests a virtual address from the management device (20) but the virtual address is not acquired from the management device (20), the virtual address from the management device (20) via the arithmetic processing unit (400), and
a storage control unit (322) that stores, in the first storing unit (311), a virtual address acquired from the management device (20) via the arithmetic processing unit (400).

3. The information processing system (10) according to claim 2, wherein
the arithmetic processing unit (400) further comprises
a boot requesting unit (412) that requests, when the control device (300) requests the virtual address from the management device (20), a boot from the management device (20), and
a transferring unit (413) that receives the virtual address and a boot command from the management device (20), that executes the boot command, and that transfers the virtual address to the control device (300).

4. The information processing system (10) according to claim 3, wherein the management device (20) further comprises a responding unit (24c) that reads, when a boot is requested from the arithmetic processing unit (400), a virtual address and a boot command from a second storing unit (23) and that responds to the arithmetic processing unit by sending the virtual address and the boot command.

5. A virtual address setting method suitable for an information processing system (10) that comprises an information processing apparatus (40), which comprises an arithmetic processing unit (400) and a control device (300) that is connected to the arithmetic processing unit (400), and that comprises a management device (20) that manages a virtual address, the virtual address setting method comprising:
instructing, by the management device (20) via the arithmetic processing unit (400) when communication abnormality occurs between the management device (20) and the control device (300), the control device (300) to perform a start,
transferring, by the control device (300) when the control device (300) is instructed by the arithmetic processing unit (400) to perform a start, a virtual address, which is stored in a storing unit (311), to the arithmetic processing unit (400), and
setting, by the arithmetic processing unit (400) when the virtual address is received from the control device (300), a port included in the arithmetic processing unit (400) to the virtual address.
